# EUROPEAN PATENT APPLICATION

(11) **EP 2 803 263 A1**
(43) Date of publication of application: **19.11.2014**
(21) Application number: 14165441.8
(22) Date of filing: 22.04.2014
(51) Int. Cl.: A01K 45/00, A22B 7/00, B08B 9/08

(54) **Plant for handling live poultry in a slaughterhouse**

(30) Priority: 16.05.2013 IT TO20130395
(71) Applicant: Zanotti, Massimo, 25064 Gussago (BS) (IT)
(72) Inventor: Zanotti, Massimo, 25064 Gussago (BS) (IT)
(74) Representative: Buzzi, Franco

(57) **Abstract**

Washing of the supporting frames (10) of units (1) for transporting live poultry from the breeding farm to the slaughterhouse is carried out, following upon extraction of the drawer-type cages (2) containing the poultry, after positioning the supporting frame (10) in a condition where it is rotated through 90° with respect to the transport configuration. Washing is carried out via a network of tubes and spray nozzles (14) that can be displaced vertically from a raised, inoperative, position to a lowered, washing, position, where said network (14) sets itself around the rotated supporting frame (10). After the supporting frame (10) has been washed, it is repositioned in the transport configuration.

## Description

### Field of the invention

The present invention relates in general to plants for handling live poultry in a slaughterhouse, where the poultry is sent to the slaughterhouse inside transport units that include supporting frames, which carry extractable drawer-type cages containing the poultry.

More in particular, the invention regards washing of the frames of the transport units following upon extraction of the drawer-type cages containing the poultry and prior to re-introduction of the drawer-type cages that have been emptied.

### Prior art

In currently known plants for handling poultry, in which washing of the supporting frames is envisaged, the latter are simply subjected to spraying with water, keeping them substantially in the same position as that of transport.

This does not enable, with the necessary degree of effectiveness, removal of all the droppings produced by the poultry during transport, which tend to drop down through the perforated bottom of the drawer-type cages, which are in a condition where they are arranged on top of one another resting on horizontal supporting slide elements of the frames. It is hence not possible to restore the optimal level of bio-safety that would, instead, be necessary after return of the supporting frames, along with the corresponding drawer-type cages, to the poultry breeders in view of subsequent shipments of poultry, the aim being to prevent any possible risk of contamination resulting from prior loads.

### Summary of the invention

The object of the present invention is thus to make available a poultry-handling plant of the type defined above, in which washing of the supporting frames of the transport units will be carried out in the most effective and complete manner possible, above all as regards the parts of the frames that during transport are arranged horizontally and are hence more exposed.

According to the invention, the above object is achieved by a handling plant as set forth in the pre-characterizing part of Claim 1 whose peculiar feature resides in that the washing station of the plant comprises first tilting means for positioning each supporting frame in a condition rotated at 90° with respect to the transport configuration in which said support elements are arranged vertically, a washing device formed by a network of tubes and spraying nozzles vertically displaceable from an inoperative raised position to a lowered washing position in which said network is located around the rotated supporting frame, and second tilting means for re-positioning the supporting frame in the transport configuration following washing.

Thanks to the above arrangement, the plant according to the invention enables effective and more complete removal, from the supporting frames of the transport units, of the organic residue that might entail the risk of causing contamination for the subsequent loads of poultry transported using the same units from the breeding sites to the slaughterhouse.

According to a preferred embodiment of the invention, the washing device is configured for carrying out a first washing cycle during descent the network of tubes and nozzles from the raised position to the lowered position, and a second washing cycle during its ascent.

### Brief description of the drawings

The invention will now be described in detail with reference to the annexed drawings, which are provided purely by way of non-limiting example and in which:
Figure 1 is a schematic perspective view that shows a part of a poultry-handling plant according to the invention, corresponding to the area of washing of the supporting frames of the units for transport of live poultry;
Figure 2 is a perspective view at a larger scale of the washing station, taken from a different angle;
Figure 3 is a partial and schematic view in side elevation of the washing station of Figure 2; and
Figure 4 is a perspective view that shows a transport unit used in the poultry-handling plant according to the invention.

### Detailed description of the invention

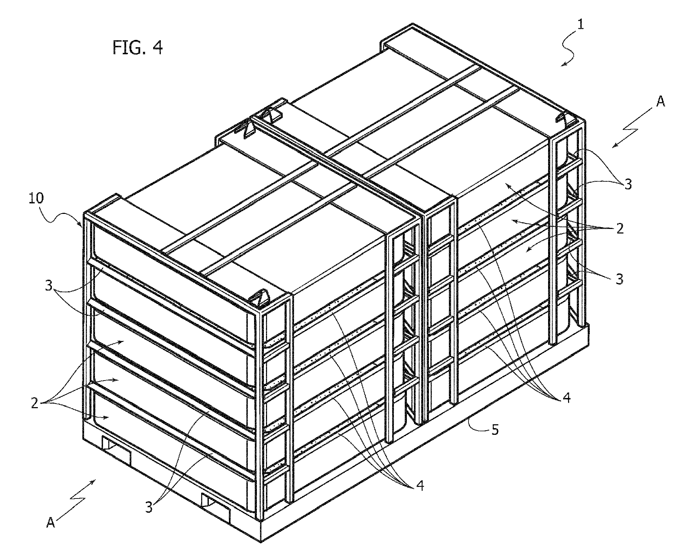

The plant for handling live poultry in a slaughterhouse, part of which is represented in the drawings, is suitable for operating with transport units generally of the type described and illustrated in the document No. WO-2011/010329. More in particular, the aforesaid transport units, designated as a whole by 1, conveniently correspond to the ones described and illustrated in the Italian patent application No. TO2013A000214, filed in the name of the present applicant and not disclosed at the date of filing of the present application, one of such transport units being illustrated in Figure 4.

In brief, the transport unit 1 comprises a sturdy quadrangular supporting frame 10 and drawer-type cages 2, which are open at the top and are inserted in the frame 10in a superimposed condition where they are arranged on top of one another. The frame 10 may be sized for containing a single pile, for example of five or more drawer-type cages 2, or else two piles, set side by side, of drawer-type cages 2, as in the case of the example represented. Each drawer-type cage 2 is able to perform a movement of sliding between the position where it is set inside the supporting frame 10, represented in Figure 4, and a position where it is slid out for unloading the poultry. Sliding-out and subsequent sliding-in of the drawer-type cages 2 is carried out, in the case of the dual configuration of the supporting frame 10, through the two opposite sides designated by A.

The drawer-type cages 2 are slidably supported on horizontal elements 3 and 4 of the supporting frame 10, which is moreover provided at the bottom with a base platform or pallet 5, on which the lowest drawer-type cage of each pile slides.

The drawer-type cages 2 are usually provided with perforations for aeration in the respective side walls as well as in the respective bottom walls. They could also be of the type with differentiated aeration, as is also described in the already cited document No. WO-2011/010329, according to which one of the side walls is provided with ventilation openings, whereas the opposite side wall is without any openings.

During transport of the live poultry with the unit 1 on board a lorry, the droppings produced by the animals drop down through the openings of the bottom walls of the drawer-type cages 2, thus soiling the corresponding supporting frame 10 in particular along the horizontal supporting elements 3, 4 and the base pallet 5. As a consequence, at the end of each shipment of poultry and before the next one, the supporting frames 10 have to be washed.

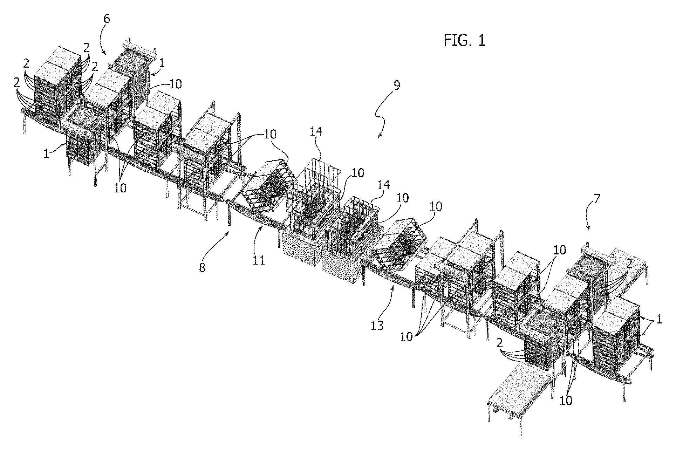

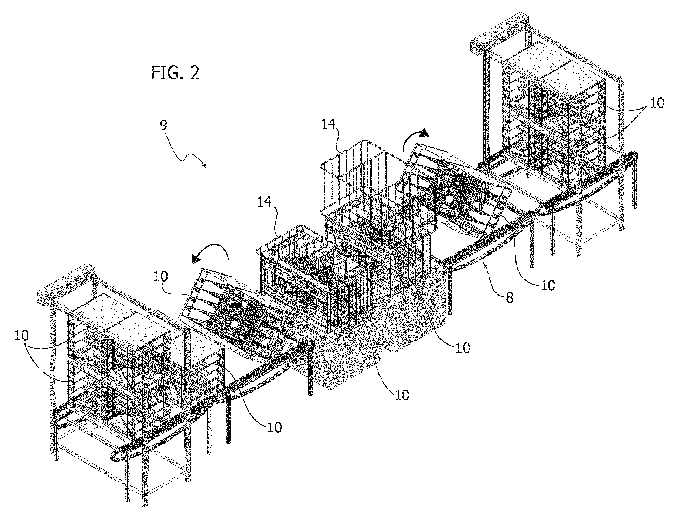

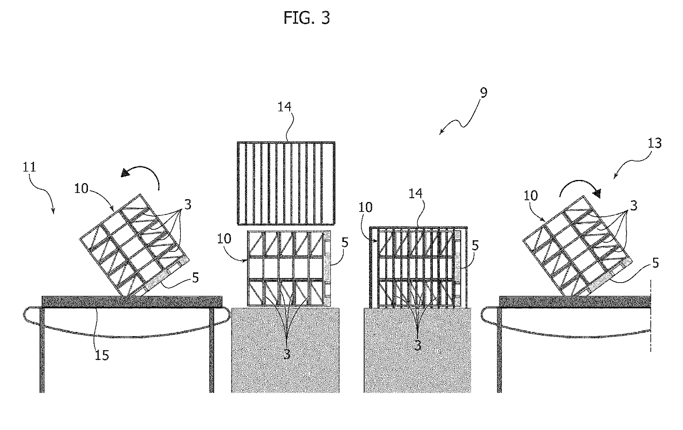

Figures 1 to 3 are schematic illustrations of the part of a plant for handling live poultry in a slaughterhouse precisely dedicated to washing of the supporting frames 10.

As may be seen in the above figures, the poultry-handling plant basically comprises an input station 6 and an output station 7 for the transport units 1, which are interconnected by a conveyor 8, for example a motor-driven chain conveyor, on which the full transport units 1 entering the input station 3 are each time deposited, and from which the empty transport units 1 coming from the output station 7 are subsequently unloaded.

At the input station 3 the drawer-type cages 2 are each time drawn out of the corresponding supporting frames 10, and the latter then proceed along the conveyor 5 to the output station 4. In the case of the example represented in the drawings, the input station 6 is pre-arranged for receiving two transport units 1 set on top of one another, from both of which the drawer-type cages 2 with the poultry inside are slid out and transferred to the subsequent stations of the slaughterhouse. The corresponding supporting frames 10 are then separated from one another on the conveyor 8, and then transferred to a washing station, designated as a whole by 9.

According to the peculiar characteristic of the invention, the washing station 9, which includes a protective booth (not represented in the drawings for simplicity of illustration) is preceded by an input station 11, where each supporting frame 10 is tilted, i.e. rotated, through 90° with respect to its normal position (i.e., that of containment and transport of the drawer-type cages 2), in such a way as to position the parts 3, 4 and 5 that are normally horizontal in a vertical condition. Rotation is carried out at the input station 11 either manually or else using mechanized equipment, which is not illustrated in so far as it falls within the reach of the person skilled in the branch.

The input station 11 is conveniently equipped with a table 15 with associated vibrating system, on which the supporting frame 10 thus rotated through 90° rests and is subjected to shaking so as to detach and shake down as much organic material as possible in order to facilitate the subsequent washing step.

Each supporting frame 10 is then transferred to the washing station 9, which is equipped with one or more washing devices 14 constituted by a network of tubes and corresponding spray nozzles. The network 14 can be displaced vertically between a raised, inoperative, position above the supporting frame 10, which is rotated through 90° in the way explained previously, and a lowered, washing, position, where it sets itself around the frame 10. Then, the washing device 14 is again raised to enable transfer of the supporting frame 10 to the output station 13 downstream of the washing station 9. Both during the movement of descent and during the subsequent movement of ascent, the network of tubes and nozzles 14 is supplied with water under pressure that sprays all the surfaces of the supporting frame 10 at close range so as to ensure effective cleaning also of the parts most exposed to the deposit of the droppings that fall from the cages during transport of the poultry, namely the supporting elements 3 and 4 and the base pallet 5, vertical positioning, instead of horizontal positioning, of which during the spraying operation enables the dirt to pour off.

At the end of the washing process, i.e., after the washing device 14 has been brought back into the raised position, the supporting frame 10 is transferred to the output section 13, where it is again rotated through 90° in the opposite direction so that it returns to its normal position for transport purposes. Also in this case, rotation can be carried out either manually or with the aid of mechanized equipment.

The frame 10 is then possibly piled up on top of a previous frame 10 and subsequently reaches the output station 7, where the drawer-type cages 2 are once again inserted into the frames 10 in order to recreate the transport units 1, ready for being transferred once again to the poultry-breeding farms.

As specified previously, the mechanized equipment that carries out rotation through 90° of the supporting frames 10 at input to and at output from the washing station 9, as well as the equipment that performs the vertical displacements of the network 14 and the equipment that both separates the supporting frames 10 from one another and couples them together again are neither described nor illustrated in detail in so far as they fall within the reach of the person skilled in the branch.

Of course, the details of construction and the embodiments may vary widely with respect to what has been described and illustrated herein, without thereby departing from the scope of the present invention as defined in the ensuing claims.

## Claims

1. Plant for handling live poultry in a slaughterhouse, in which the poultry is delivered to the slaughterhouse in transport units (1) including supporting frames (10) carrying extractable drawer-like cages (2), arranged in a superimposed condition upon horizontal slidable support elements (3, 4, 5) of said supporting frames (10), said plant including a washing station (9) of said supporting frames (10) following extraction of the drawer-like cages (2) with the poultry and prior to re-introduction of the drawer-like cages (2) when emptied, **characterized in that** said washing station (9) comprises first tilting means (11) for positioning each supporting frame (10) in a condition rotated at 90° with respect to the transport configuration in which said support elements (3, 4, 5) are arranged vertically, a washing device (14) formed by a network of tubes and spraying nozzles vertically displaceable from an inoperative raised position to a lowered washing position in which said network is located around the rotated supporting frame (10), and second tilting means (13) for re-positioning the supporting frame (10) in the transport configuration following washing.

2. Plant according to claim 1, **characterized in that** said washing device (14) is configured to carry out a first washing cycle during lowering from the raised position to the lowered position and a second washing cycle during raising from the lowered to the raised position.

3. Washing method for supporting frames (10) of transport units (1) for delivering live poultry to a slaughterhouse, **characterized in that** it comprises the steps of tilting each supporting frame (10) of 90° with respect to its normal transport configuration, spraying the supporting frame (10) with water under pressure, and thereafter repositioning the supporting frame (10) in the transport configuration.

4. Method according to claim 3, **characterized in that** the step of spraying the 90°-tilted supporting frame (10) with water under pressure is carried out by vertical displacement of a network of tubes and spraying nozzles (14) from a raised position to a lowered position in which it is located around the tilted supporting frame (10).

5. Method according to claim 4, **characterized in that** washing is carried out in a first spraying cycle during displacement of said network (14) from the raised position to the lowered position, and a second spraying cycle during displacement of said network (14) from the lowered to the raised position.

6. Method according to claim 4 or 5, **characterized in that** following the 90°-tilting and prior to washing the supporting frame (10) is subjected to shaking.
